# FASCICULE DE BREVET EUROPEEN

(11) **EP 2 586 648 B1**
(45) Date de publication et mention de la délivrance du brevet: **08.04.2015**
(21) Numéro de dépôt: 12189471.1
(22) Date de dépôt: 22.10.2012
(51) Int. Cl.: B60N 2/005, B60N 2/07

(54) **Système comprenant une glissière de siège de véhicule automobile et un support destiné a y etre fixé et procédé de fabrication d'un tel système**
System, das eine Gleitschiene für einen Fahrzeugsitz umfasst, und Halterung zur Befestigung an dieser Gleitschiene sowie Herstellungsverfahren eines solchen Systems
System comprising an automobile seat rail and a mounting intended for being attached thereto, and method for manufacturing such a system

(30) Priorité: 24.10.2011 FR 1159614
(43) Date de publication de la demande: 01.05.2013
(73) Titulaire: Faurecia Sièges d'automobile, 92000 Nanterre (FR)
(72) Inventeur: Couasnon, Christian, 61100 Flers (FR)
(74) Mandataire: Cabinet Plasseraud

(56) Documents cités:
- FR-A1- 2 879 138
- FR-A1- 2 899 523
- FR-A1- 2 930 203

## Description

La présente invention est relative aux systèmes comprenant une glissière de siège de véhicule automobile et un support destiné à y être fixé, et aux procédés de fabrication de tels systèmes (voir, p.e. le document FR-A-2930203).

Plus particulièrement, l'invention se rapporte à un système comprenant une glissière de siège de véhicule automobile et un support, ladite glissière comprenant un profilé fixe destiné à être rapporté sur le châssis du véhicule automobile, et un profilé mobile adapté pour coulisser par rapport au profilé fixe dans une direction longitudinale, le profilé mobile présentant une surface supérieure s'étendant dans une direction transversale entre deux ailes latérales, la direction transversale étant perpendiculaire à la direction longitudinale, les ailes latérales s'étendant chacune dans un plan vertical perpendiculaire à la direction transversale, le support comprenant une portion de liaison munie d'une surface inférieure horizontale adaptée pour être fixée sur la surface supérieure du profilé mobile.

Le document EP 1 425 198 décrit un exemple d'un tel système. Dans ce document, le support est un élément de fixation comprenant une zone partielle agencée de façon obtuse sur une surface du rail de guidage. Une telle fixation est simple et utilise peu de matériau.

Le support est destiné à recevoir par la suite, et à maintenir solidaire de la glissière, des équipements tels que l'extrémité d'une ceinture de sécurité ou un cadre support de siège de véhicule. Il pourra donc être soumis à des efforts importants et la présente invention a notamment pour but de rendre la fixation dudit équipement au véhicule encore plus robuste, en particulier lorsque la direction de l'effort exercé sur l'équipement est variée.

Il est connu de renforcer la liaison entre le support et le profilé mobile de la glissière au moyen par exemple d'une soudure au gaz inerte avec électrode de Tungstène, aussi appelée soudure TIG. Une telle soudure TIG est cependant onéreuse, la présente invention a donc également pour but d'offrir une solution peu couteuse au problème de la fixation d'un équipement au châssis du véhicule.

A cet effet, selon l'invention, un système du genre en question est caractérisé en ce que la surface inférieure horizontale est munie d'une languette qui s'étend dans le plan vertical à travers une ouverture pratiquée dans la surface supérieure du profilé mobile, et en ce que la languette est fixée à l'une des ailes latérales du profilé mobile.

Comme détaillé plus bas, grâce à cette disposition, le profilé mobile de la glissière est sollicité en traction et non plus en cisaillement ce qui accroît notablement la résistance dudit profilé en présence d'efforts importants. La liaison entre le support et le profilé mobile est quant à elle sollicitée en cisaillement et non plus en traction. Cependant, la résistance de cette liaison étant supérieure à celle du profilé mobile, ceci ne présente pas d'inconvénient. Cette liaison est de plus assez résistante pour ne pas nécessiter de renforcement tel que la soudure TIG décrite plus haut.

Dans des modes de réalisation préférés de l'invention, on peut éventuellement avoir recours en outre à l'une et/ou à l'autre des dispositions suivantes :
- la languette est réalisée par pliage d'une zone découpée dans la surface inférieure horizontale de la portion de liaison ;
- la surface inférieure horizontale du support est fixée à la surface supérieure du profilé mobile par soudage laser ;

- la languette est fixée à l'une des ailes latérales du profilé mobile par soudage laser ;
- le cordon de soudure liant la languette à l'une des ailes latérales est localisé à l'extrémité inférieure de la languette ;
- le cordon de soudure liant la languette à l'une des ailes latérales est localisé sur le côté de la languette ;
- le support comporte deux ailes latérales permettant la fixation d'un ou plusieurs équipements externes.

Selon un autre aspect, l'invention se rapporte à un procédé de fabrication d'un système pour véhicule automobile dans lequel :
- on fournit une glissière comprenant un profilé fixe destiné à être rapporté sur le châssis du véhicule automobile, et un profilé mobile adapté pour coulisser par rapport au profilé fixe dans une direction longitudinale, le profilé mobile présentant une surface supérieure s'étendant entre deux ailes latérales dans une direction transversale, perpendiculaire à la direction longitudinale, les ailes latérales étant comprises dans un plan vertical perpendiculaire à la direction transversale,
- on fournit un support comprenant une portion de liaison munie d'une surface inférieure horizontale adaptée pour être fixée sur la surface supérieure du profilé mobile et d'une languette s'étendant dans le plan vertical,
- on forme dans la surface supérieure du profilé mobile une ouverture adaptée pour laisser passer la languette,
- on insère la languette du support dans l'ouverture,
- on fixe la languette à l'une des ailes latérales du profilé mobile.

Dans certains modes de réalisation on peut en outre prévoir que la languette soit fixée à l'une des ailes latérales par soudage laser.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue schématique d'un côté d'un siège de véhicule automobile,
- la figure 2 est une vue éclatée en perspective d'un système,
- la figure 3 est une vue en perspective d'un système assemblé,
- la figure 4a est une vue en coupe du système selon un premier mode de réalisation de l'invention, selon la ligne III-III de la figure 3,
- la figure 4b est une vue en coupe du système selon un second mode de réalisation de l'invention, selon la ligne III-III de la figure 3,
- les figures 5a et 5b présentent des réalisations de l'art antérieur,
- la figure 6a présente un système selon l'invention ainsi que la direction de l'effort exercé sur celui-ci au cours des mesures comparatives, le profilé mobile et le profilé fixe étant coupés selon un plan médian longitudinal,
- la figure 6b présente une vue de dessus d'un système selon l'invention ainsi que la direction de l'effort exercé sur celui-ci au cours des mesures comparatives,
- et la figure 7 présente un organigramme de procédé de fabrication d'un système selon l'invention.

Sur les différentes figures, les mêmes références désignent des éléments identiques ou similaires.

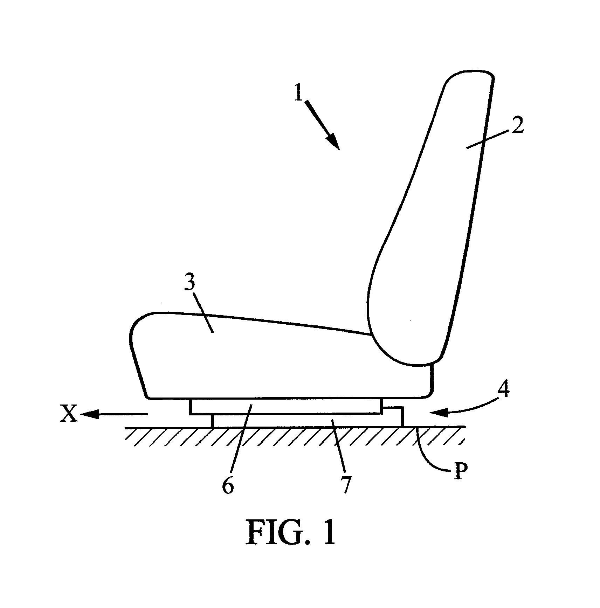

La figure 1 représente de manière très schématique un siège 1 de véhicule automobile comprenant un dossier 2 et une assise 3 sur laquelle peut par exemple être monté le dossier 2. L'assise 3 est rapportée sur le plancher P du châssis du véhicule automobile par l'intermédiaire d'une ou de plusieurs glissières 4 (par exemple deux glissières latérales).

Les glissières 4 comportent le plus souvent un profilé fixe 7 qui est rapporté, généralement fixé, au châssis du véhicule automobile et un profilé mobile 6 auquel est fixé l'assise 3 du siège par des moyens détaillés ci-après. Le profilé fixe 7 et le profilé mobile 6 ont des formes complémentaires permettant au profilé mobile 6 de coulisser selon la direction longitudinal X par rapport au profilé fixe, de façon à régler la position longitudinale du siège 1 dans l'habitacle du véhicule automobile.

L'assise 3 comporte généralement une armature métallique rigide (non représentée) comprenant deux bras latéraux espacés s'étendant dans la direction longitudinale X de l'assise et reliés entre eux par des traverses. L'assise est usuellement fixée au profilé mobile par la coopération entre ces bras latéraux et un support 5 lui-même rapporté sur le profilé mobile 6 de la glissière 4.

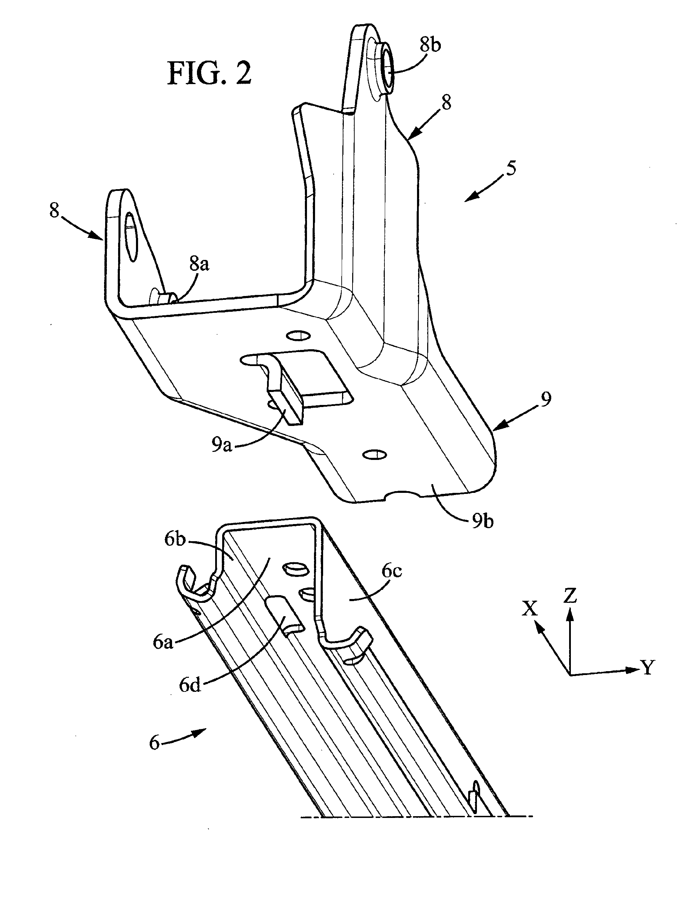

Comme cela est visible sur la figure 2, le support 5 est placé au-dessus du profilé mobile 6 dans la direction verticale Z. Il comporte deux ailes latérales 8 munies de trous 8a et 8b permettant la fixation d'un ou plusieurs équipement(s) externe(s). Un trou 8a permet par exemple de fixer l'extrémité d'une ceinture de sécurité (non-représentée). Un trou 8b permet de fixer l'assise du siège (non-représentée), directement ou par l'intermédiaire d'un dispositif de réglage en hauteur.

Le support 5 comprend en outre une portion de liaison 9 permettant de fixer le support 5 au profilé mobile 6. A cette fin, la portion de liaison 9 comprend une languette 9a s'étendant suivant le plan vertical X, Z. La portion de liaison 9 peut en outre comprendre une surface inférieure 9b, s'étendant dans un plan d'extension horizontal X, Y, perpendiculaire à la direction verticale Z.

Le profilé mobile 6 a sa plus grande extension suivant la direction longitudinale X et possède une face supérieure 6a s'étendant dans une direction transversale Y entre deux ailes latérales 6b et 6c. Les ailes latérales 6b et 6c s'étendent verticalement dans un plan vertical X, Z, perpendiculaire à la direction transversale Y, et permettent d'assurer l'emboîtement, le maintien et le bon coulissement des profilés 6 et 7 entre eux ; l'un étant un profilé mâle qui est emboîté à l'intérieur de l'autre profilé, dit profilé femelle. Le profilé mobile peut par exemple être réalisé par pliage d'une tôle unitaire.

La surface supérieure 6a du profilé mobile peut en outre comporter une ouverture 6d permettant le passage de la languette 9a du support 5.

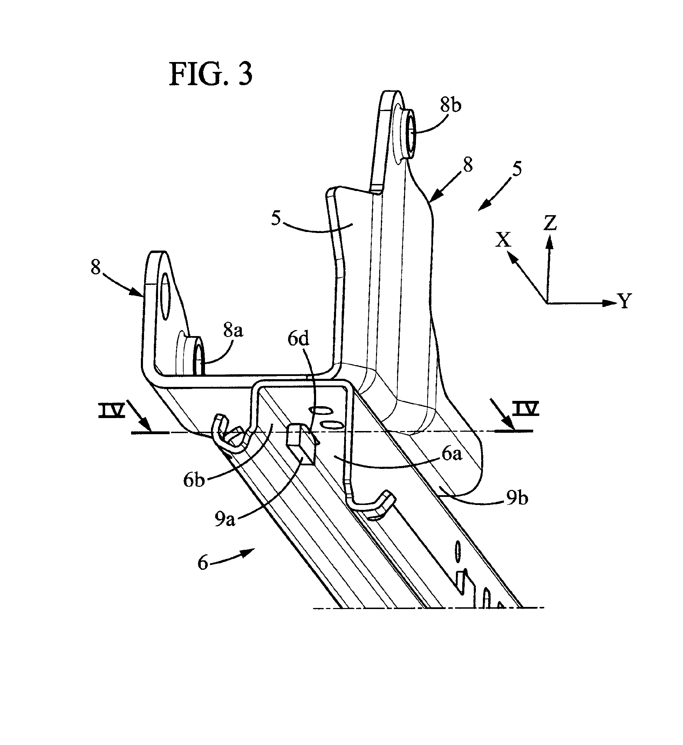

Comme représenté sur la figure 3, une fois le système assemblé, la languette 9a est insérée au travers de l'ouverture 6d et vient se placer en contact étendu avec l'aile latérale 6b du profilé mobile 6, par exemple sur la face intérieure de ladite aile latérale. De plus, la surface inférieure 9b du support 5 peut venir se placer en contact étendu avec la surface supérieur 6a du profilé mobile 6.

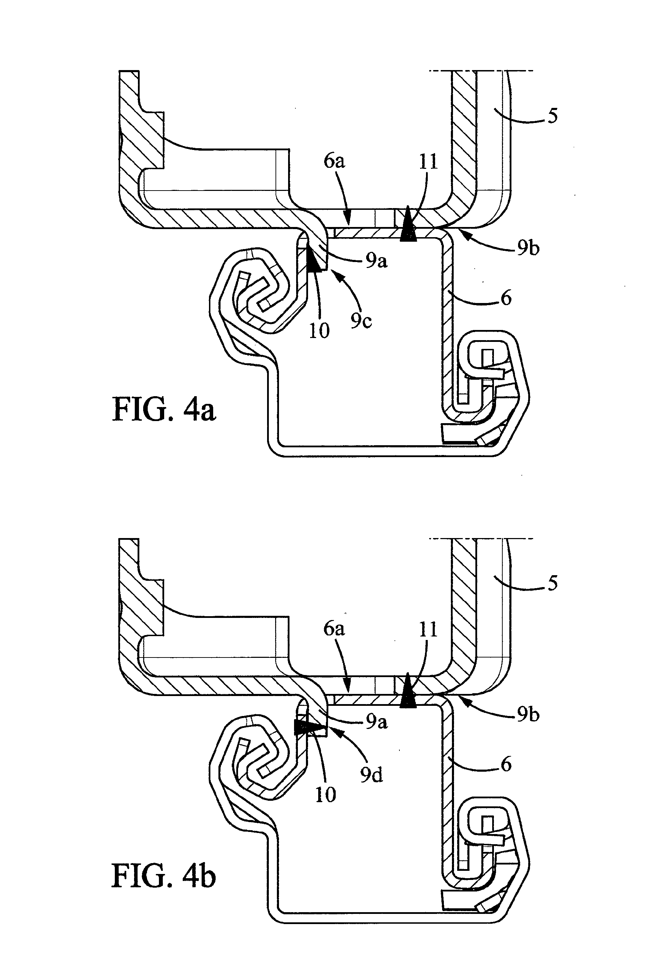

Dans le premier mode de réalisation, représenté sur la figure 4a, la fixation du support 5 au profilé mobile 6 est réalisé au moyen de plusieurs soudures laser. Une ou plusieurs premières soudures lasers 11 (une seule est visible sur la figure 4a) sont réalisées entre la surface inférieure 9b du support 5 et la surface supérieur 6a du profilé mobile 6. De plus, une seconde soudure laser 10 au niveau de l'extrémité inférieure 9c de la languette 9a permet de renforcer la liaison.

Dans un second mode de réalisation, représenté sur la figure 4b, une ou plusieurs premières soudures lasers 11 (une seule est visible sur la figure 4b) sont réalisées entre la surface inférieure 9b du support 5 et la surface supérieur 6a du profilé mobile 6, comme dans le premier mode de réalisation. La seconde soudure laser 10, permettant de renforcer la liaison, est réalisée sur le côté de la languette 9a.

Les soudures laser 10 peuvent donc être réalisées sur une surface plus grande que dans le cas d'une soudure réalisée entre la face d'un support et l'épaisseur de tôle d'un profilé. Elles sont donc plus résistantes. En outre, la direction principale des efforts exercée étant verticale, la liaison est sollicitée en traction et non pas en cisaillement ce qui augmente la tenue de la liaison.

Enfin, la combinaison des soudures lasers 10 et 11, orientée respectivement suivant le plan d'extension horizontal et le plan vertical, permet une bonne tenue de la liaison pour différentes directions des efforts exercés sur le support.

Les fixations par soudure laser peuvent être du type entre cuir et chair ou tout autre type de soudure. Quand cela est applicable, les soudures lasers peuvent aussi être remplacées par ou accompagnées de fixations par collage, par clinchage, par sertissage, par rivetage ou par tout autre moyen de fixation connu de l'homme du métier.

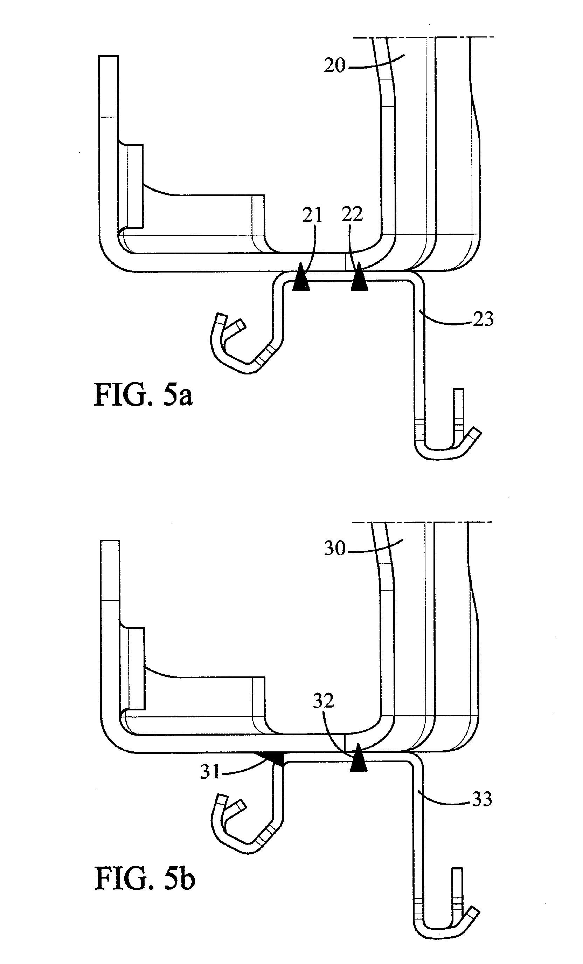

Les figures 5a et 5b présentent des réalisations de l'art antérieur. La figure 5a présente un support 20 ne disposant pas de languette et fixé en deux points 21 et 22 à la face supérieure du profilé mobile 23. La figure 5b présente un support 30 fixé en deux points 31 et 32 à la face supérieure du profilé mobile 33. La fixation au point 31 est réalisée au moyen d'une soudure au gaz inerte avec électrode de Tungstène, aussi appelée soudure TIG.

Des mesures comparatives de résistance à la traction ont été réalisées permettant de comparer la résistance des deux modes de réalisation des figures 4a et 4b avec les dispositifs de l'art antérieur indiqués figures 5a et 5b.

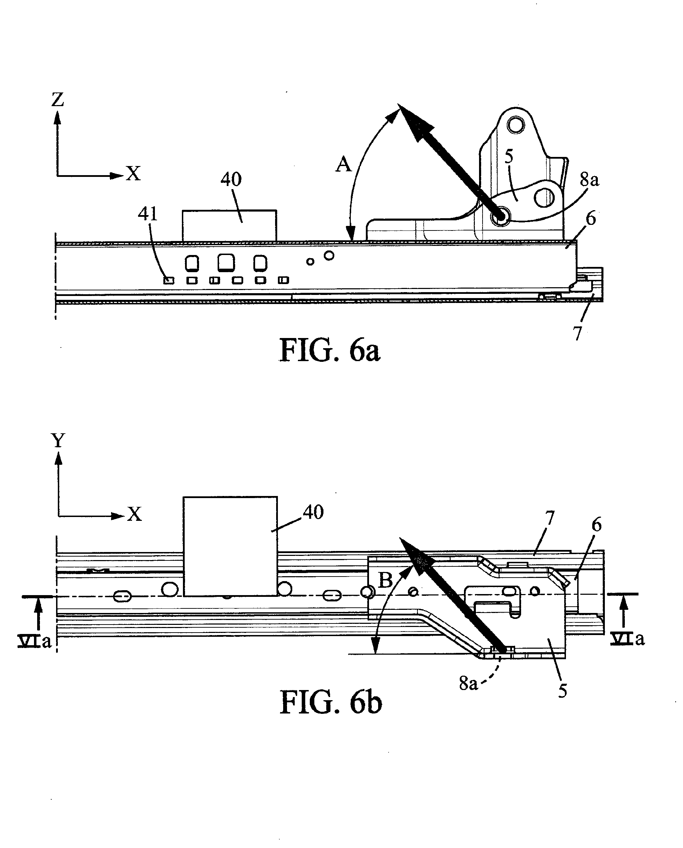

Comme indiqué sur les figures 6a et 6b, ces mesures ont été réalisées par traction au niveau du trou 8a pratiqué dans l'une des ailes latérales 8, l'effort de traction étant appliqué selon un angle A de 45° avec la direction verticale Z et un angle B de 15° avec la direction longitudinale X.

Les efforts exercés sur le profilé mobile 6 se transmettent au profilé fixe 7 par l'intermédiaire d'un verrou 40 reliant le profilé mobile 6 au profilé fixe 7. Un tel verrou 40 est par exemple décrit dans la demande de brevet français publiée sous le numéro FR 2 919 234. Ce verrou est visible sur les figures 6a et 6b et fonctionne de la façon suivante.

Les profilés fixes 7 et mobiles 6 sont munis d'une série ouvertures traversantes 41 visibles par exemple sur la figure 6a, sur laquelle le profilé mobile 6 et le profilé fixe 7 ont été coupé suivant un plan médian longitudinal.

Le verrou 40 possède une partie allongée adaptée pour coopérer avec les ouvertures du profilé fixe 7 et du profilé mobile 6 selon l'axe transversale Y. L'actionnement du verrou 40 par l'utilisateur permet de dissocier le profilé fixe 7 et le profilé mobile 6 et ainsi de déplacer l'assise 2 du siège selon la direction longitudinale X.

Lorsque le verrou 40 est relâché, la partie allongée du verrou 40 vient traverser au moins deux des ouvertures traversantes 41, lesdites deux ouvertures traversantes étant alignées selon l'axe transversale Y, l'une appartenant au profilé fixe 7, l'autre au profilé mobile 6. Le profilé fixe 7 et le profilé mobile 6 sont alors immobilisés entre eux et leur liaison permet le transfert des efforts depuis l'équipement externe fixé à l'une des ailes latérales 8 jusqu'au profilé fixe 7.

Lors d'une utilisation d'un système selon l'invention au sein d'un véhicule automobile, le profilé fixe 7 est en outre fixé au châssis du véhicule par des vis de fixation non visibles sur les figures 6a et 6b, ceci permettant de transmettre les efforts de l'assise du siège au châssis du véhicule.

Les résultats des mesures comparatives sont résumés dans le tableau suivant.

| | **Traction maximale avant défaut (N)** |
|---|---|
| **Figure 5a** | 11800 |
| **Figure 5b** | 30766 |
| **Figure 4a** | 32017 |
| **Figure 4b** | 30979 |

On peut observer que l'invention se comporte mieux que la réalisation de la figure 5a et aussi bien que la réalisation de la figure 5b, alors même que les soudures utilisées sont des soudures lasers, moins résistantes que la soudure TIG utilisée dans la réalisation de la figure 5b.

Un système selon l'invention supporte ainsi une traction maximale aussi élevée qu'un système renforcé par des soudures TIG tout en étant moins onéreux à fabriquer du fait de l'utilisation de soudures laser uniquement.

Ceci provient en particulier de la sollicitation en traction du profilé mobile et non pas en cisaillement comme dans les réalisations de l'art antérieur présentées figure 5a et 5b. La liaison par soudure entre le support et le profilé mobile est quant à elle sollicitée en cisaillement et non plus en traction. Cependant, la résistance de cette soudure étant supérieure à celle du profilé mobile, ceci ne présente pas d'inconvénient.

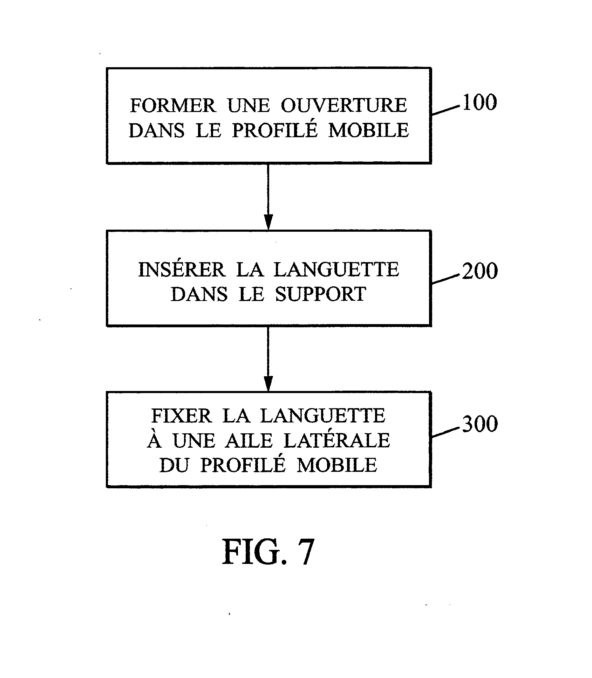

Un procédé de fabrication d'un système selon l'invention est indiqué schématiquement sur la figure 7.

Après acquisition d'une glissière comprenant un profilé fixe et un profilé mobile ainsi qu'un support comprenant une portion de liaison munie d'une languette s'étendant dans le plan vertical (X, Z), on forme dans la surface supérieure du profilé mobile une ouverture adaptée pour laisser passer la languette au cours d'une première étape 100.

Une seconde étape 200 consiste à insérer la languette du support dans l'ouverture.

Enfin, une troisième étape 300 consiste à fixer la languette à l'une des ailes latérales du profilé mobile.

## Revendications

1. Système comprenant une glissière de siège (4) de véhicule automobile et un support (5),
ladite glissière (4) comprenant un profilé fixe (7) destiné à être rapporté sur le châssis (P) du véhicule automobile, et un profilé mobile (6) adapté pour coulisser par rapport au profilé fixe (7) dans une direction longitudinale (X),
le profilé mobile (6) présentant une surface supérieure (6a) s'étendant dans une direction transversale (Y) entre deux ailes latérales (6b, 6c), la direction transversale (Y) étant perpendiculaire à la direction longitudinale (X), les ailes latérales (6b, 6c) s'étendant chacune dans un plan vertical (X, Z) perpendiculaire à la direction transversale (Y),
le support (5) comprenant une portion de liaison (9) munie d'une surface inférieure horizontale (9b) adaptée pour être fixée sur la surface supérieure (6a) du profilé mobile (6), le système étant
**caractérisé en ce que** la surface inférieure horizontale (9b) est munie d'une languette (9a) qui s'étend dans le plan vertical (X, Z) à travers une ouverture (6d) pratiquée dans la surface supérieure (6a) du profilé mobile (6),
**et en ce que** la languette (9a) est fixée à l'une des ailes latérales (6b, 6c) du profilé mobile (6).

2. Système selon la revendication 1, dans lequel la languette (9a) est réalisée par pliage d'une zone découpée dans la surface inférieure horizontale (9b) de la portion de liaison (9).

3. Système selon l'une des revendications 1 ou 2, dans lequel la surface inférieure horizontale (9b) du support (5) est fixée à la surface supérieure (6a) du profilé mobile (6) par soudage laser.

4. Système selon l'une des revendications 1 à 3, dans lequel la languette (9a) est fixée à l'une des ailes latérales (6b, 6c) du profilé mobile (6) par soudage laser.

5. Système selon la revendication 4, dans lequel le cordon de soudure (10) liant la languette (9a) à l'une des ailes latérales (6b) est localisé à l'extrémité inférieure (9c) de la languette (9a).

6. Système selon la revendication 4, dans lequel le cordon de soudure (10) liant la languette (9a) à l'une des ailes latérales (6b) est localisé sur le côté de la languette (9a).

7. Système selon l'une des revendications 1 à 6, dans lequel le support (5) comporte deux ailes latérales (8) permettant la fixation d'un ou plusieurs équipements externes.

8. Procédé de fabrication d'un système pour véhicule automobile dans lequel :
- on fournit une glissière (4) comprenant un profilé fixe (7) destiné à être rapporté sur le châssis (P) du véhicule automobile, et un profilé mobile (6) adapté pour coulisser par rapport au profilé fixe (7) dans une direction longitudinale (X), le profilé mobile (6) présentant une surface supérieure (6a) s'étendant entre deux ailes latérales (6b, 6c) dans une direction transversale (Y), perpendiculaire à la direction longitudinale (X), les ailes latérales (6b, 6c) étant comprises dans un plan vertical (X, Z) perpendiculaire à la direction transversale (Y),
- on fournit un support (5) comprenant une portion de liaison (9) munie d'une surface inférieure horizontale (9b) adaptée pour être fixée sur la surface supérieure (6a) du profilé mobile (6) et d'une languette (9a) s'étendant dans le plan vertical (X, Z),
- on forme (100) dans la surface supérieure (6a) du profilé mobile (6) une ouverture (6d) adaptée pour laisser passer la languette (9a),
- on insère (200) la languette (9a) du support (5) dans l'ouverture (6d),
- on fixe (300) la languette (9a) à l'une des ailes latérales (6b) du profilé mobile (6).

9. Procédé selon la revendication 8 dans lequel la languette (9a) est fixée à l'une des ailes latérales (6b) par soudage laser.

## Patentansprüche

1. System, das eine Gleitschiene (4) für einen Fahrzeugsitz und eine Halterung (5) aufweist,
wobei die Gleitschiene (4) ein an der Karosserie (P) des Fahrzeugs fest anbringbares stationäres Profil (7) und ein mobiles Profil (6) aufweist, das bezüglich des stationären Profils (7) in eine Längsrichtung (X) verschiebbar ist,
wobei das mobile Profil (6) eine obere Oberfläche (6a) aufweist, die sich zwischen zwei lateralen Flügeln (6b,6c) in eine transversale Richtung (Y) erstreckt, wobei die transversale Richtung (Y) orthogonal zur Längsrichtung (X) ist und die zwei lateralen Flügel (6b,6c) sich jeweils in einer vertikalen Ebene (X,Z), die orthogonal zur transversalen Richtung (Y) ist, erstrecken,
wobei die Halterung (5) einen Verbindungsabschnitt (9) aufweist, der mit einer horizontalen unteren Oberfläche (9b) versehen ist, die an der oberen Oberfläche (6a) des mobilen Profils (6) anbringbar ist,
wobei das System **dadurch gekennzeichnet ist, dass** die horizontale untere Oberfläche (9b) mit einer Zunge (9a) versehen ist, die sich in der vertikalen Ebene (X,Z) durch eine Öffnung (6d) erstreckt, die in der oberen Oberfläche (6a) des mobilen Profils (6) ausgespart ist, und
dadurch, dass die Zunge (9a) an einem der lateralen Flügel (6b,6c) des mobilen Profils (6) befestigt ist.

2. System nach Anspruch 1, in welchem die Zunge (9a) durch Falten einer in der horizontalen unteren Oberfläche (9b) des Verbindungsabschnitts (9) ausgeschnittenen Zone gebildet ist.

3. System nach einem der Ansprüche 1 oder 2, in welchem die horizontale untere Oberfläche (9b) der Halterung (5) mittels Laserschweißen an der oberen Oberfläche (6a) des mobilen Profils (6) befestigt ist.

4. System nach einem der Ansprüche 1 bis 3, in welchem die Zunge (9a) mittels Laserschweißen an einem der lateralen Flügel (6b,6c) des mobilen Profils (6) befestigt ist.

5. System nach Anspruch 4, in welchem die Schweißnaht (10), die die Zunge (9a) mit dem einen der lateralen Flügel (6b) verbindet, am unteren Ende (9c) der Zunge (9a) angeordnet ist.

6. System nach Anspruch 4, in welchem die Schweißnaht (10), die die Zunge (9a) mit dem einen der lateralen Flügel (6b) verbindet, an der Seite der Zunge (9a) angeordnet ist.

7. System nach einem der Ansprüche 1 bis 6, in welchem die Halterung (5) zwei laterale Flügel (8) aufweist, die das Befestigen von mehreren externen Ausstattungsteilen erlauben.

8. Verfahren zur Herstellung eines Systems für ein Automobilfahrzeug, mit
- Bereitstellen einer Gleitschiene (4), die ein an der Karosserie (P) des Fahrzeugs fest anzubringendes stationäres Profil (7) und ein mobiles Profil (6) aufweist, das bezüglich des stationären Profils (7) in eine Längsrichtung (X) verschiebbar ist, wobei das mobile Profil (6) eine obere Oberfläche (6a) aufweist, die sich zwischen zwei lateralen Flügeln (6b,6c) in eine transversale Richtung (Y), die orthogonal zur Längsrichtung (X) ist, erstreckt und wobei die zwei lateralen Flügel (6b,6c) in einer vertikalen Ebene (X,Z) liegen, die orthogonal zur transversalen Richtung (Y) ist,
- Bereitstellen einer Halterung (5), die einen Verbindungsabschnitt (9) aufweist, der mit einer horizontalen unteren Oberfläche (9b), die an der oberen Oberfläche (6a) des mobilen Profils (6) anzubringen ist, und mit einer Zunge (9a) versehen ist, die sich in der vertikalen Ebene (X,Z) erstreckt,
- Bilden (100) einer Öffnung (6d) in der oberen Oberfläche (6a) des mobilen Profils (6), durch welche sich die Zunge (9a) einführen lässt,
- Einführen (200) der Zunge (9a) der Halterung (5) in die Öffnung (6d) und
- Befestigen (300) der Zunge (9a) an einem der lateralen Flügel (6b) des mobilen Profils (6).

9. Verfahren nach Anspruch 8, in welchem die Zunge (9a) mittels Laserschweißen an dem einen der lateralen Flügel (6b) befestigt wird.

## Claims

1. System comprising an automotive vehicle seat slide (4) and a support (5),
said slide (4) comprising a fixed section (7) designed to be connected to the frame (P) of the automotive vehicle and a mobile section (6) designed to slide relative to the fixed section (7) in a longitudinal direction (X),
the mobile section (6) having a top surface (6a) extending in a transverse direction (Y) between two side wings (6b, 6c), the transverse direction (Y) being perpendicular to the longitudinal direction (X), the side wings (6b, 6c) each extending in a vertical plane (X, Z) perpendicular to the transverse direction (Y),
the support (5) comprising a connecting portion (9) having a horizontal bottom surface (9b) designed to be affixed to the top surface (6a) of the mobile section (6), the system being
**characterised in that** the horizontal bottom surface (9b) is provided with a tab (9a) which extends in the vertical plane (X, Z) through an opening (6d) disposed in the top surface (6a) of the mobile section (6),
and **in that** the tab (9a) is affixed to one of the side wings (6b, 6c) of the mobile section (6).

2. System as claimed in claim 1, wherein the tab (9a) is formed by folding a cut-out zone in the horizontal bottom surface (9b) of the connecting portion (9).

3. System as claimed in one of claims 1 or 2, wherein the horizontal bottom surface (9b) of the support (5) is affixed to the top surface (6a) of the mobile section (6) by laser welding.

4. System as claimed in one of claims 1 to 3, wherein the tab (9a) is affixed to one of the side wings (6b, 6c) of the mobile section (6) by laser welding.

5. System as claimed in claim 4, wherein the welding bead (10) joining the tab (9a) to one of the side wings (6b) is disposed at the bottom end (9c) of the tab (9a).

6. System as claimed in claim 4, wherein the welding bead (10) connecting the tab (9a) to one of the side wings ((6b) is disposed on the side of the tab (9a).

7. System as claimed in one of claims 1 to 6, wherein the support (5) has two side wings (8) enabling one or more external items of equipment to be attached.

8. Method of producing a system for an automotive vehicle, wherein
- a slide (4) is provided, comprising a fixed section (7) designed to be connected to the frame (P) of the automotive vehicle and a mobile section (6) designed to slide relative to the fixed section (7) in a longitudinal direction (X), the mobile section (6) having a top surface (6a) extending between two side wings (6b, 6c) in a transverse direction (Y) perpendicular to the longitudinal direction (X), the side wings (6b, 6c) being contained in a vertical plane (X, Z) perpendicular to the transverse direction (Y),
- a support (5) is provided, comprising a connecting portion (9) having a horizontal bottom surface (9b) designed to be affixed to the top surface (6a) of the mobile section (6) and a tab (9a) extending in the vertical plane (X, Z),
- an opening (6d) is formed (100) in the top surface (6a) of the mobile section (6) designed to enable the tab (9a) to pass through,
- the tab (9a) of the support (5) is inserted (200) in the opening (6d),
- the tab (9a) is affixed (300) to one of the side wings (6b) of the mobile section (6).

9. Method as claimed in claim 8, wherein the tab (9a) is affixed to one of the side wings (6b) by laser welding.
